**Europäisches Patentamt**

**European Patent Office**

**Office européen des brevets**

(19)

(11) Veröffentlichungsnummer: **0 279 176
B1**

# (12) EUROPÄISCHE PATENTSCHRIFT

(45) Veröffentlichungstag der Patentschrift:
**27.12.90**

(51) Int. Cl.⁵: **G01T 1/29**

(21) Anmeldenummer: **88100523.5**

(22) Anmeldetag: **15.01.88**

(54) **Röntgendiagnostikeinrichtung mit einem Speicherleuchtschirm.**

(30) Priorität: **28.01.87 DE 3702512**

(43) Veröffentlichungstag der Anmeldung:
**24.08.88 Patentblatt 88/34**

(45) Bekanntmachung des Hinweises auf die Patenterteilung:
**27.12.90 Patentblatt 90/52**

(84) Benannte Vertragsstaaten:
**BE DE FR IT NL**

(56) Entgegenhaltungen:
**EP-A- 0 112 204
EP-A- 0 129 801
EP-A- 0 142 645
FR-A- 2 483 117**

(73) Patentinhaber: **Siemens Aktiengesellschaft,
Wittelsbacherplatz 2, D-8000 München 2(DE)**

(72) Erfinder: **Schittenhelm, Rudolf, Dr.,
Von-Bezzel-Strasse 6, D-8520 Erlangen(DE)**

## Beschreibung

Die Erfindung betrifft eine Röntgendiagnostikeinrichtung mit einem Speicherleuchtschirm für die latente Speicherung des jeweiligen Röntgenstrahlenbildes, mit einer Auslesevorrichtung, bei der zur Bildwiedergabe der Speicherleuchtschirm zum Leuchten angeregt wird, mit einem Abbildungssystem und einem Detektor für das von dem Speicherleuchtschirm emittierte Licht, mit einem Monitor und mit einer Steuervorrichtung.

In der DE-C 2 451 978 ist eine derartige Röntgendiagnostikeinrichtung beschrieben, bei der als strahlenempfindlicher Wandler ein Leuchtschirm aus einem Thermolumineszenz-Speicherleuchtstoff mit Röntgenstrahlen bestrahlt wird, so daß in ihm Defektelektronen erzeugt werden, die in Potentialfallen (Traps) mit höherem Energieniveau gespeichert werden. In einer Auslesevorrichtung wird dieser Speicherleuchtschirm von einer zusätzlichen Strahlenquelle, beispielsweise einem Laser, bildpunktweise abgetastet, so daß die in den Traps gespeicherten Elektronen angeregt werden und in niedrigere Energieniveaus zurückfallen können, wobei die Energiedifferenz in Form von Lichtquanten abgestrahlt wird. Dadurch ist es möglich, das derart gespeicherte Röntgenstrahlenbild auszulesen.

Während der Abtastung einer Zeile durch den Laserstrahl wird das von dem Speicherleuchtschirm emittierte Licht durch einen optischen Kollektor erfaßt und auf der lichtempfindlichen Eingangsfläche eines Detektors abgebildet. Das Ausgangssignal des Detektors wird einer normalen Fernsehkette zur Wiedergabe des Röntgenbildes zugeführt.

Um eine rasche Bildauslesung zu erreichen, muß jedoch der Leuchtstoff auch in hoher Konzentration Traps enthalten, in denen die Elektronen nicht festgehalten, sondern spontan in sichtbares Licht umgesetzt werden (Spontanemission). Diese für den Auslesevorgang notwendigen Traps werden auch während der Röntgenbestrahlung mit Elektronen besetzt und sofort entleert. Das bedeutet aber, daß ein Teil der Energie der Röntgenstrahlen während der Röntgenaufnahme verlorengeht, so daß nur eine geringe Ausbeute der aufgewandten Energie erfolgt.

Aus der DE-C 2 940 454 ist ein Verfahren zur Aufzeichnung eines Strahlungsbildes auf einem Aufzeichnungsmaterial bekannt, bei dem das spontan emittierte Licht eines Speicherleuchtstoffes von einem Detektor erfaßt und als Meßwert der Röntgenquelle zugeführt wird, so daß dadurch die Belichtungsdauer und Belichtungsstärke des Speicherleuchtstoffes geregelt werden können. Hierbei wird also das spontan emittierte Licht nur zur Messung und Regelung verwendet. Für die eigentliche Bildaufnahme und Bilderfassung wird wiederum nur der relativ geringe Anteil der gespeicherten Energie herangezogen.

In der EP-A 0 142 645 ist eine Röntgendiagnostikeinrichtung mit einem Speicherleuchtschirm beschrieben, bei der der Leuchtschirm mit einem Bildverstärker elektronenoptisch mit einer Bildverstärkereinheit gekoppelt ist. Diese Einheit wird in einem Aufnahmeteil mit Röntgenstrahlen belichtet, so daß in dem Speicherleuchtstoff ein Bild latent gespeichert ist. Anschließend wird der Speicherleuchtschirm der Einheit in einer Auslesestation eines Widergabeteiles bildpunktweise abgetastet. Durch die Kopplung des Röntgenbildverstärkers und des Speicherleuchtschirmes ergibt sich ein unerwünscht komplizierter Aufbau.

Aus der EP-A 0 112 204 ist ein Röntgengerät bekannt, bei dem ein Leuchtschirm bestrahlt wird, der aus mit Europium dotiertem Gadoliniumoxisulfid besteht. Das von dem Leuchtschirm während der Bestrahlung mit Röntgenstrahlen emittierte Licht wird durch einen Photodetektor erfaßt. Aufgrund des auf den Photodetektor einfallenden Lichtes werden Ladungen erzeugt, die in dem Photodetektor integriert werden. Bei dem Leuchtstoff handelt es sich aber um keinen Speicherleuchtstoff, so daß eine nachfolgende Auslesung in einem Widergabeteil nicht möglich ist. Dadurch kann nur das sofort emittierte Licht eines Leuchtstoffes erfaßt werden, so daß sich nur eine geringe Lichtausbeute ergibt. Auch ist eine länger andauernde Speicherung des Röntgenstrahlenbildes nicht möglich.

Die Erfindung geht von der Aufgabe aus, eine Röntgendiagnostikeinrichtung der eingangs genannten Art zu schaffen, die eine bessere Energieausnutzung ermöglicht.

Die Aufgabe wird erfindungsgemäß durch eine Vorrichtung gemäß Patentanspruch 1 gelöst. Durch diese Anordnung ist es möglich, bereits während der Aufnahme wenigstens ein Bild aufgrund der Spontanemission zu erhalten. Durch die starre Zusammenfassung zu einer Einheit ergeben sich keine Deckungsprobleme zwischen den Spontanemissionsbildern und den Speicherbildern. Durch die Überlagerung erhält man eine nahezu vollständige Energieausbeute.

Die Auslesegeschwindigkeit kann erhöht oder die Verarbeitungsbandbreite erniedrigt werden, wenn die Steuervorrichtung mit der Auslesevorrichtung und dem Detektor verbunden ist, die die Anregungsenergie der Auslesevorrichtung und die Abtastgeschwindigkeit steuert. Eine gleichzeitige Betrachtung bei der Aufnahme kann erreicht werden, wenn der Detektor mit dem Monitor zur Darstellung von Durchleuchtungsbildern verbunden ist. Es hat sich als vorteilhaft erwiesen, wenn der Detektor eine Fernsehaufnahmeröhre oder einen matrixförmigen CCD-Bildwandler aufweist. Eine Beeinflussung der Bildinhalte kann erreicht werden, wenn an dem Detektor oder an dem Speicher eine Verarbeitungsschaltung angeschlossen ist, in der die einzelnen Röntgenstrahlenbilder getrennt verarbeitet werden.

Die Aufgabe wird auch durch das Verfahren gemäß Patentanspruch 7 gelöst. Eine vorteilhafte Weiterbildung ist das Merkmal gemäß Patentanspruch 8.

Die Erfindung ist nachfolgend anhand eines in der Zeichnung dargestellten Ausführungsbeispieles näher erläutert. Es zeigen:

Fig. 1 den Aufnahmeteil einer erfindungsgemäßen Röntgendiagnostikeinrichtung,

Fig. 2 den Wiedergabeteil einer erfindungsgemäßen Röntgendiagnostikeinrichtung,

Fig. 3 den Schaltungsaufbau der in den Fig. 1 und
2 dargestellten Verarbeitungsschaltung 7, und

Fig. 4 Kurven zur Darstellung des Zeitablaufes
in einer erfindungsgemäßen Röntgendiagnostikeinrichtung.

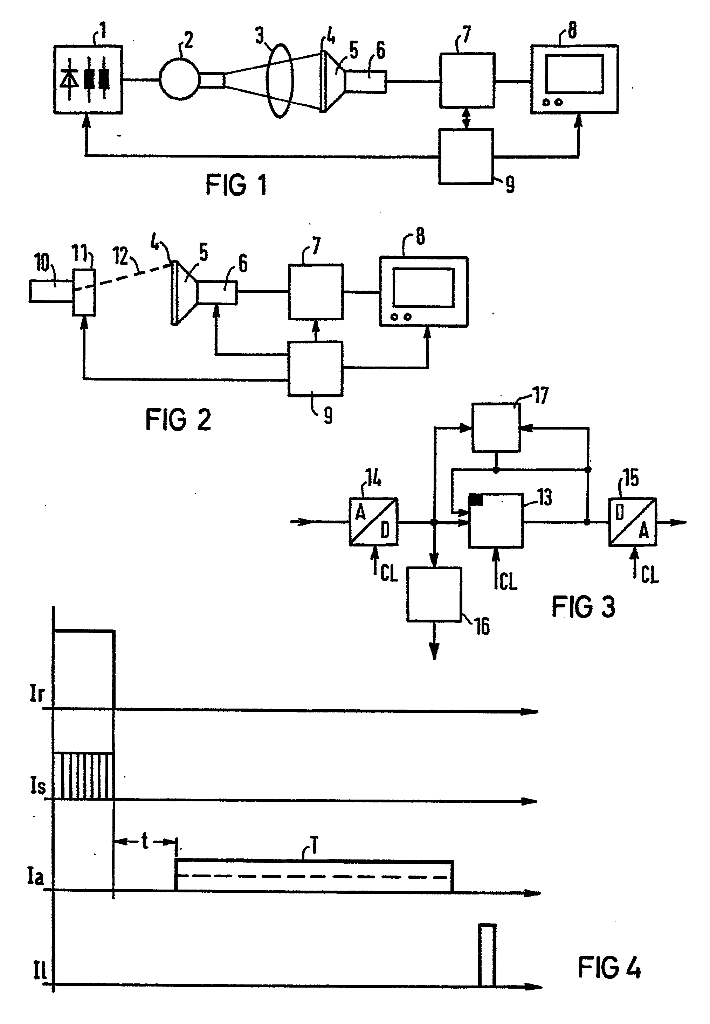

In der Fig. 1 ist ein Hochspannungsgenerator 1
dargestellt, der eine Röntgenröhre 2 speist, die
Röntgenstrahlen aussendet, die einen Patienten 3
durchdringen. Die durch den Patienten 3 entspre-
chend seiner Transparenz geschwächten Röntgen-
strahlen fallen auf einen Lumineszenz-Speicherleuchtschirm 4. Dieses auffallende Strahlenbild erzeugt in dem Speicherleuchtschirm 4, wie bereits
beschrieben, Defektelektronen, die in einer Potentialfalle des Leuchtstoffes gespeichert werden, so
daß in dem Speicherleuchtschirm 4 ein latentes Bild
gespeichert ist.

Gleichzeitig werden in dem Speicherleuchtschirm
4 Elektronen angeregt, die sofort von ihrem höheren Energieniveau zurückfallen und somit eine
Spontanemission bewirken. Dieses durch Spontanemission ausgesandte Licht wird durch ein Abbildungssystem 5 auf einem flächenförmigen Detektor
6, beispielsweise eine Fernsehaufnahmeröhre oder
einen matrixförmigen CCD-Wandler, abgebildet,
der das Licht erfaßt und in ein elektrisches Signal
umwandelt, das einer Verarbeitungsschaltung 7 zugeführt wird. Die Verarbeitungsschaltung 7 enthält,
wie in Fig. 3 dargestellt, Bildspeicher 13, A/D-Wandler 14 und D/A-Wandler 15, eine Meßwerterfassungsschaltung 16 und wenigstens eine Rechenschaltung 17. Das von dem Detektor 6 erfaßte Bild
kann während der Aufnahme gleichzeitig auf einem
Monitor 8 zur Kontrolle wiedergegeben werden.
Ebenfalls an der Verarbeitungsschaltung 7 ist eine
Steuereinrichtung 9 angeschlossen, die weiterhin
mit dem Monitor 8 und dem Hochspannungsgenerator 1 verbunden ist. Sie erzeugt die Steuertakte CL
zur Synchronisation der Verarbeitungsschaltung 7
und des Monitors 8. Gleichzeitig wird ihr von der
Meßwerterfassungsschaltung 16 der Verarbeitungsschaltung 7 ein Signal zugeführt, das die Steuerung des Hochspannungsgenerators 1 und damit
der Röntgenstrahlenquelle und deren Abschalten
bewirkt. Dies kann punktweise innerhalb einer
"Region of Interest" oder über das ganze Bild erfolgen.

Zur Wiedergabe des latenten Bildes wird der
Speicherleuchtschirm 4 durch eine Lichtquelle angeregt. Dies kann gleichzeitig über seine gesamte
Fläche durch eine Beleuchtungsvorrichtung erfolgen. Es kann aber auch, wie in Fig. 2 dargestellt, ein
Laser 10 vorgesehen sein, dem eine Ablenkvorrichtung 11 vorgeschaltet ist, die einen von dem Laser 10
ausgehenden Laserstrahl 12 zeilenweise über den
Speicherleuchtschirm 4 ablenkt. Die Ablenkvorrichtung 11 für den Laser 10 kann beispielsweise aus
einem Ablenkspiegel für die vertikale und einem
elektrooptischen Strahlenablenker für die horizontale Ablenkung bestehen. Durch die Abtastung mit
dem Laserstrahl 12 werden alle auf dem Speicherleuchtschirm 4 liegenden Bildpunkte zeilenweise nacheinander angeregt und zum Leuchten gebracht. Das Abbildungssystem 5 erfaßt das vom
Speicherleuchtschirm 4 emittierte Licht und leitet es
auf den Detektor 6, der die Helligkeit der abgetasteten Bildpunkte erfaßt und in ein elektrisches Signal
umwandelt, das der Verarbeitungsschaltung 7 zugeführt wird, die aus den einzelnen analogen Ausgangssignalen des Detektors 6 ein Videosignal zur
Darstellung auf dem Monitor 8 erzeugt. Bei der
Wiedergabe des latenten Bildes bewirkt die Steuereinrichtung 9 die Synchronisation der Ablenkvorrichtung 11, der Verarbeitungsschaltung 7 und des
Monitors 8.

Im folgenden wird der Aufnahme- und Wiedergabevorgang anhand den in Fig. 4 dargestellten Kurven näher erläutert. In der ersten Kurve ist die Intensität der Röntgenstrahlen Ir über der Zeit aufgetragen. Die zweite Kurve beinhaltet die Intensität
des dem Detektor 6 zugeführten spontan emittier-
ten Lichtes Is. In der dritten Kurve ist die durch die
Anregung hervorgerufene Intensität Ia über der
Zeit aufgetragen. Die vierte Kurve gibt den Lö-
schimpuls mit einer Intensität Il wieder.

Zu Beginn wird der Hochspannungsgenerator 1
eingeschaltet, so daß die Röntgenröhre 2 Röntgenstrahlen mit der Intensität Ir aussendet. Der Speicherleuchtstoff emittiert dabei spontan Licht einer
Intensität Is, das vom Abbildungssystem 5 auf dem
Detektor 6 abgebildet wird. Dieser tastet mit einer
normalen Abtastrate das spontan emittierte Licht
mehrfach ab, wobei die Einzelbilder in dem Bildspeicher 13 der Verarbeitungsschaltung 7 abgelegt werden. Dies kann dadurch erfolgen, daß jedes Einzelbild einen getrennten Speicherplatz erhält. Es können aber auch die Einzelbilder durch die
Rechenschaltung 17 integrierend in einen Speicher-
platz eingelesen werden. Eine Belichtungsautoma-
tik, bestehend aus der Meßwerterfassungsschal-
tung 16 in der Verarbeitungsschaltung 7 und der
Steuereinrichtung 9, erfaßt das spontan emittierte
Licht und bewirkt die Abschaltung der Röntgenstrahlung. Anschließend wird die Einheit, bestehend
aus Leuchtschirm 4, Abbildungssystem 5 und Detektor 6 der in Fig. 2 dargestellten Auslesevorrichtung zugeführt. Dies bewirkt eine Pause t. Die Pause kann entsprechend dem gewählten Speicherleuchtstoff mehrere Stunden oder aber auch Tage
andauern. Anschließend wird der Leuchtschirm 4
über die Zeitdauer T mit Anregungsstrahlen der In-
tensität Ia stimuliert, wobei das von dem Leuchtschirm ausgesandte Licht durch den Detektor 6 erfaßt wird, dessen Ausgangssignal in den Bildspeicher 13 eingelesen wird. Nach erfolgter Auslesung
wird der Speicherleuchtschirm 4 mit einem Licht der
Intensität Il vollständig belichtet, so daß die noch in
den Traps gehaltenen Elektronen vollständig in das
niedrigere Energieniveau zurückfallen und die Information auf dem Speicherleuchtschirm 4 vollständig gelöscht ist. Nunmehr kann die Einheit erneut
zur Aufnahme verwendet werden.

Anschließend werden die in dem Bildspeicher 13
enthaltenen Einzelbilder der Spontanemission und
der stimulierten Emission beispielsweise in der Rechenschaltung 17 getrennt verarbeitet, überlagert
und auf dem Monitor 8 wiedergegeben. Dieses Bild kann nun in bekannter Weise in einer Hardcopy oder einem weiteren Speicher zur späteren Befundung abgespeichert werden.

## Patentansprüche

1. Röntgendiagnostikeinrichtung mit einem Speicherleuchtschirm (4) für die latente Speicherung des jeweiligen Röntgenstrahlenbildes, mit einer Auslesevorrichtung (10, 11), bei der zur Bildwiedergabe der Speicherleuchtschirm (4) zum Leuchten angeregt wird, mit einem Abbildungssystem (5) und einem Detektor (6) für das von dem Speicherleuchtschirm (4) emittierte Licht, mit einem an den Detektor (6) angeschlossenen Bildspeicher (13) einer Verarbeitungsschaltung (7), mit einem Monitor (8) und mit einer Steuervorrichtung (9), dadurch gekennzeichnet, daß der Speicherleutschirm (4), das Abbildungssystem (5) und der Detektor (6) zu einer Einheit zusammengefaßt sind und daß die Steuervorrichtung (9) und die Verarbeitungsschaltung (7) derart ausgebildet sind, daß in dem Bildspeicher (13) während der Aufnahme des Röntgenstrahlenbildes wenigstens ein Bild aufgrund der Spontanemission des Speicherleuchtstoffes und während des Auslesevorgeanges ein weiteres Bild abgespeichert werden, wobei die Bilder bildpunktweise überlagert werden.

2. Röntgendiagnostikeinrichtung nach Anpruch 1, dadurch gekennzeichnet, daß die Steuervorrichtung (9) mit der Auslesevorrichtung (5) und dem Detektor (6) verbunden ist und die Anregungsenergie der Auslesevorrichtung (10, 11) und die Abtastgeschwindigkeit steuert.

3. Röntgendiagnostikeinrichtung nach Anspruch 1 oder 2, dadurch gekennzeichnet, daß der Detektor (6) mit dem Monitor (8) zur Darstellung von Durchleuchtungsbildern während der Aufnahme des Röntgenstrahlenbildes verbunden ist.

4. Röntgendiagnostikeinrichtung nach den Ansprüchen 1 bis 3, dadurch gekennzeichnet, daß der Detektor (6) eine Fernsehaufnahmeröhre aufweist.

5. Röntgendiagnostikeinrichtung nach den Ansprüchen 1 bis 3, dadurch gekennzeichnet, daß der Detektor (6) einen matrixförmigen CCD-Bildwandler aufweist.

6. Röntgendiagnostikeinrichtung nach den Ansprüchen 1 bis 5, dadurch gekennzeichnet, daß an dem Detektor (6) oder an dem Bildspeicher (13) eine Verarbeitungsschaltung (7, 17) angeschlossen ist, in der die einzelnen Röntgenstrahlenbilder getrennt verarbeitet werden.

7. Verfahren zur Erstellung eines Röntgenbildes mittels einer Röntgendiagnostikeinrichtung mit Speicherleuchtschirm (4) gemäß einem der vorhergehenden Ansprüche mit folgenden Schritten:
a) Bestrahlen eines Objektes mit Röntgenstrahlen zur Erzeugung eines Röntgenstrahlenbildes,
b) Erstellen einer Aufnahme des Röntgestrahlenbildes mit einem Speicherleuchtschirm (4), gekennzeichnet durch die folgenden Schritte:
c) Bestrahlen des Speicherleuchtschirmes (4) mit Licht zum Auslesen des im Speicherleuchtschirm (4) gespeicherten Röntgenstrahlenbildes und Erfassen des während des Auslesevorganges emittierten Lichtes mittels des Detektors (6) und Speicherung des zugehörigen elektrischen Ausgangssignales des Detektors (6) in einem Bildspeicher (13)
d) Erfassen des während der Aufnahme des Röntgenstrahlenbildes aufgrund der Spontanemission des Speicherleuchtstoffes vom Speicherleuchtschirm (4) ausgehenden, einem jeweiligen Röntgenstrahlenbild entsprechenden Lichtes mittels eines Detektors (6) und Speicherung des zugehörigen elektrischen Ausgangssignales des Detektors (6) im Bildspeicher (13),
e) bildpunktweise Überlagerung der im Bildspeicher (13) enthaltenen Signale
f) Wiedergabe des überlagerten Signals auf einem Monitor (8).

8. Verfahren nach Anspruch 7, dadurch gekennzeichnet, daß während der Aufnahme des Röntgenstrahlenbildes der Detektor (6) mit dem Monitor (8) zur Darstellung von Durchleuchtungsbildern verbunden ist.

## Claims

1. An x-ray diagnostic device with a persistent luminescent screen (4) for the latent storage of the respective x-ray image, with a read-out device (10, 11), by means of which for image reproduction the persistent luminescent screen (4) is induced to illuminate, with a display system (5) and a detector (6) for the light emitted by the persistent luminescent screen (4), with an image store (13) of a processing circuit (7) connected to the detector (6), with a monitor (8) and with a control device (9), characterised in that the persistent luminescent screen (4), the display system (5) and the detector (6) are combined to form one unit and in that the control device (9) and the processing circuit (7) are constructed such that, in the image store (13), at least one image based on the spontaneous emission of the persistent luminescent material is stored during recording of the x-ray image and a further image is stored during the read-out process, wherein the images are superimposed in pixel fashion.

2. An x-ray diagnostic device according to claim 1, characterised in that the control device (9) is connected to the read-out device (5) and the detector (6) and controls the excitation energy of the read-out device (10, 11) and the scan rate.

3. An x-ray diagnostic device according to claim 1 or 2, characterised in that the detector (6) is connected to the monitor (8) for representing fluoroscopic images during the recording of the x-ray image.

4. An x-ray diagnostic device according to claims 1 to 3, characterised in that the detector (6) has a television recording tube.

5. An x-ray diagnostic apparatus according to claims 1 to 3, characterised in that the detector (6) has a matrix shaped CCD-image converter.

6. An x-ray diagnostic apparatus according to claims 1 to 5, characterised in that connected to the detector (6) or the image store (13) there is a processing circuit (7, 17) in which the individual x-ray images are processed separately.

7. A method for creating an x-ray image by means of an x-ray diagnostic device with a persistent luminescent screen (4) according to one of the preceding claims with the following steps:

a) irradiation of an object with x-rays for generating an x-ray image,

b) creation of a recording of the x-ray image with a persistent luminescent screen (4),

c) irradiation of the persistent luminescent screen (4) with light for reading-out the x-ray image stored in the persistent luminescent screen and detection of the light emitted during the read-out process by means of the detector (6) and storage of the associated electrical output signal of the detector (6) in an image store (13), characterised by the following steps:

d) detection of the light emanating during the recording of the x-ray image on the basis of the spontaneous emission of the persistent luminescent material from the persistent luminescent screen (4), corresponding to a respective x-ray image by means of a detector (6) and storage of the associated electric output signal of the detector (6) in the image store (13),

e) pixel superimposition of the signals contained in the image store (13),

f) reproduction of the superimposed signal on a monitor (8).

8. A method according to claim 7, characterised in that during the recording of the x-ray image the detector (6) is connected to the monitor (8) for representing fluoroscopic images.

**Revendications**

1. Appareil de radiodiagnostic comportant un écran luminescent de mémorisation (4) permettant de réaliser la mémorisation latente de l'image respective du rayonnement X, comportant un dispositif de lecture (10, 11), et dans lequel pour la reproduction d'une image, on excite l'écran luminescent de mémorisation (4) pour qu'il s'éclaire, et comportant un système (5) de formation d'images et un détecteur (6) de lumière émise par l'écran luminescent de mémorisation (4), une mémoire d'images (13) raccordée au détecteur (6), un circuit de traitement (7), un moniteur (8) et un dispositif de commande (9), caractérisé par le fait que l'écran luminescent de mémorisation (4), le signal de formation d'images (5) et le détecteur (6) sont, réunis pour former une unité et que le dispositif de commande (9) et le circuit de traitement (7) sont agencés de manière que dans la mémoire d'images (13), pendant l'enregistrement d'une image radiologique, au moins une image est mémorisée sur la base de l'émission spontanée produite par la substance luminescente de mémorisation et pendant l'opération de lecture une autre image est mémorisée, les images étant superposées point-à-point.

2. Appareil de radiodiagnostic suivant la revendication 1, caractérisé par le fait que le dispositif de commande (9) est relié au dispositif de lecture (5) du détecteur (6) et commande l'énergie de l'excitation du dispositif de lecture (10, 11) et la vitesse de balayage.

3. Appareil de radiodiagnostic suivant la revendication 1 ou 2, caractérisé par le fait que le détecteur (6) est relié au moniteur (8) pour la représentation d'images radiologiques, pendant un enregistrement de l'image radiologique.

4. Appareil de radiodiagnostic suivant les revendications 1 à 3, caractérisé par le fait que le détecteur (6) possède un tube d'enregistrement de télévision.

5. Appareil de radiodiagnostic suivant les revendications 1 à 3, caractérisé par le fait que le détecteur (6) possède un convertisseur d'images CCD sous forme de matrices.

6. Appareil de radiodiagnostic suivant les revendications 1 à 5, caractérisé par le fait qu'au détecteur (6) ou à la mémoire d'images (13) est raccordé un circuit de traitement (7, 17), dans lequel les différentes images radiologiques sont traitées séparément.

7. Procédé pour former une image radiologique à l'aide d'un appareil de radiodiagnostic comportant un écran luminescent de mémoire (4), conforme à l'une des revendications précédentes, et incluant les étapes opératoires suivantes consistant à:

a) irradier un objet avec un faisceau de rayons X pour produire une image radiologique,

b) réaliser l'enregistrement d'une image radiologique avec un écran luminescent de mémorisation (4),

c) irradier l'écran luminescent de mémorisation (4) avec une lumière pour lire l'image radiographique mémorisée dans l'écran luminescent (4) et détecter la lumière, émise pendant l'opération de lecture, au moyen du détecteur (6) et mémoriser le signal électrique de sortie associé du détecteur (6) dans une mémoire d'images (13),

d) détecter la lumière émanant de l'écran luminescent de mémorisation (4) pendant la réalisation de la radiographie, sous l'effet de l'émission spontanée produite par cette substance luminescente, et correspondant à une image radiographique respective, à l'aide d'un détecteur (6) et mémoriser le signal électrique de sortie associé du détecteur (6) dans une mémoire d'images (13),

e) superposer point-à-point les signaux contenus dans la mémoire d'images (13),

f) reproduire le signal superposé sur un moniteur (8).

8. Procédé suivant la revendication 7, caractérisé par le fait que pendant l'enregistrement d'une image radiographique, le détecteur (6) est relié en moniteur (8) pour la représentation d'images radioscopiques.

FIG 1

FIG 2

FIG 3

FIG 4